# EUROPEAN PATENT SPECIFICATION

(11) **EP 3 340 706 B1**
(45) Date of publication and mention of the grant of the patent: **20.01.2021**
(21) Application number: 15904407.2
(22) Date of filing: 24.09.2015
(51) Int. Cl.: H04W 72/04

(54) **INFORMATION TRANSMISSION METHOD AND DEVICE**
INFORMATIONSÜBERTRAGUNGSVERFAHREN UND -VORRICHTUNG
PROCÉDÉ ET DISPOSITIF DE TRANSMISSION D'INFORMATIONS

(43) Date of publication of application: 27.06.2018
(73) Proprietor: Huawei Technologies Co., Ltd., Longgang District Shenzhen, Guangdong 518129 (CN)
(72) Inventor: WANG, Da, Shenzhen Guangdong 518129 (CN); WANG, Jian, Shenzhen Guangdong 518129 (CN); LIU, Bin, Shenzhen Guangdong 518129 (CN)
(74) Representative: Gill Jennings & Every LLP
(86) International application number: PCT/CN2015/090509
(87) International publication number: WO 2017/049520

(56) References cited:
- WO-A1-2014/092305
- WO-A1-2015/122718
- CN-A- 104 640 211
- CN-A- 104 796 986
- US-A1- 2015 119 056
- HUAWEI ET AL: "SA content for D2D broadcast communication", 3GPP DRAFT; R1-142838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Dresden, Germany; 20140818 - 20140822 17 August 2014 (2014-08-17), XP050788323, Retrieved from the Internet: URL:http://www.3gpp.org/ftp/Meetings_3GPP_ SYNC/RAN1/Docs/ [retrieved on 2014-08-17]
- HUAWEI ET AL: "Mode 2 resource allocation for D2D", 3GPP DRAFT; R1-142839, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Dresden, Germany; 20140818 - 20140822 10 August 2014 (2014-08-10), XP050815240, Retrieved from the Internet: URL:http://www.3gpp.org/ftp/tsg_ran/WG1_RL 1/TSGR1_78/Docs/ [retrieved on 2014-08-10]

## Description

### TECHNICAL FIELD

Embodiments of the present invention relate to wireless communications technologies, and in particular, to an information transmission method and a device.

### BACKGROUND

In a vehicle to vehicle (Vechicle to Vechicle, V2V for short) communication system, each vehicle can be used as an information source to exchange data with a surrounding vehicle in a broadcast or unicast manner and send a V2V signal in a broadcast manner, so that information can be efficiently transferred, the surrounding vehicle can be instructed in a special case to perform a security-related operation, and network flexibility can be improved. The V2V signal may be a periodic broadcast signal, for example, a discovery signal that enables a vehicle to be aware of a surrounding vehicle, where the discovery signal includes vehicle status information such as a vehicle speed, a location, an acceleration, and a vehicle identifier (Identify, ID for short); a co-operative awareness message (Cooperative Awareness Message, CAM for short) signal that is broadcast by a vehicle such as an ambulance or a fire trunk, where the CAM signal includes a vehicle speed, a location, an acceleration, a vehicle ID, a direction, and a driving route; or a decentralized environment notification message (Decentralized Environment Notification Message, DENM for short) signal that is broadcast by an accident vehicle, where the DENM signal includes a location, a direction, and a vehicle ID.

The V2V communication system is similar to an existing device-to-device (Device to Device, D2D for short) communication system. Signals transmitted in the D2D system mainly include a D2D discovery signal and a D2D communication signal. The V2V signal that is periodically broadcast in the V2V communication system may be transmitted by transmitting the D2D discovery signal or the D2D communication signal in the D2D communication system. In a process of transmitting the V2V signal, because a V2V device randomly uses a time-frequency resource in a resource pool to send the V2V signal, there is a conflict that a plurality of V2V devices simultaneously select a same time-frequency resource, and because the V2V signal is limited by half-duplex, a V2V signal sent by each of conflicting devices cannot be successfully received by another device. For example, when sending a V2V signal in a subframe b, a device A cannot receive a V2V signal sent by another device in the subframe b by using a same frequency or another frequency. To resolve this problem, usually, the V2V signal is consecutively sent in different subframes for at least four times.

If the V2V signal is consecutively sent for a plurality of times, a relatively large delay is caused, and devices cannot quickly receive V2V signals from each other. This disadvantage is tolerable for a discovery signal in the V2V signal. However, for a CAM signal or a DENM signal, traffic accident occurrence probability increases because a CAM signal or a DENM signal sent by a device cannot be successfully received by another device in time.

For example, WO2015122718A1 discloses a D2D communication method. A plurality of the transmission UEs are operated so as to transmit the control message to the reception UE through different periods with each other probabilistically, wherein the control information is used to notify that the transmission UE tries to perform the D2D communication to the reception UE in the D2D communication.

"Mode 2 resource allocation for D2D"(R1-142839, 3GPP) discloses a transmitter announces to let others know about the selected resource. If there is only the transmitter itself who announces the specific resource while no other transmitters have announced the same resource, the UE can transmit in the next period.

### SUMMARY

The present invention provides an information transmission method and a device, so that a conflict between a CAM signal or a DENM signal sent by a device and a discovery signal sent by another device can be avoided, and the another device can quickly and accurately receive the CAM signal or the DENM signal sent by the device.

The object of the present invention is achieved by the features of the appended independent claims.

According to a first aspect,
an embodiment of the present invention provides an information transmission method, including:
receiving, by a second device, a first signal sent by a first device at a second resource location and a third resource location, wherein
the first signal carries first resource location indication information being used to indicate a first resource location at which the first device sends a second signal or a control signal of the second signal, wherein the second resource location is corresponding to first coordinates (Tᵢ, fⱼ) in a transmission pattern, and wherein the third resource location is corresponding to second coordinates (T_{(i+m) mod N}, fⱼ) or (T_{(i+p) mod N,} f_{(i+q) mod N}) in the transmission pattern, wherein N, i, j, x, and y are positive integers, none of i, j, x, and y are greater than N, i+m≤N, and m, p, and q are 0 or positive integers, and wherein the transmission pattern comprises a time axis and a frequency axis, the time axis comprises N time points (T₁, T₂, ..., and T_{N}), the frequency axis comprises N frequency points (f₁, f₂, ..., and f_{N}), and each pair of coordinates (Tₓ, f_{y}) in the transmission pattern is corresponding to a resource location;
determining, by the second device according to the first signal, the first resource location at which the first device sends the second signal or the control signal of the second signal, and sending a first signal of the second device to the first device at a resource location different from the determined resource location; and
receiving, by the second device, the second signal or the control signal of the second signal that is sent by the first device at the first resource location.

In a first possible implementation of the first aspect, the first resource location indication information includes:
at least one bit, used to indicate whether to send the second signal in a next period of a current period; and
a resource bitmap, a control signal index, or at least two of a physical resource block PRB start location, a PRB end location, or a PRB quantity, used to indicate the resource location used for sending the second signal or the control signal of the second signal.

According to a third aspect, an embodiment of the present invention provides a communications device that is used as a first device and includes a processor and a transceiver, where
the processor is configured to: send a first signal to a second device by using the transceiver at a second resource location and a third resource location, wherein the first signal carries first resource location indication information being used to indicate a first resource location at which the first device sends a second signal or a control signal of the second signal, wherein the second resource location is corresponding to first coordinates (Tᵢ, fⱼ) in a transmission pattern, wherein the third resource location is corresponding to second coordinates (T_{(i+m) mod N}, fⱼ) or (T_{(i+p) mod N}, f_{(i+q) mod N}) in the transmission pattern, wherein N, i, j, x, and y are positive integers, none of i, j, x, and y are greater than N, i+m≤N, and m, p, and q are 0 or positive integers, and wherein the transmission pattern comprises a time axis and a frequency axis, the time axis comprises N time points (T₁, T₂, ..., and T_{N}), the frequency axis comprises N frequency points (f₁, f₂, ..., and f_{N}), and each pair of coordinates (Tₓ, f_{y}) in the transmission pattern is corresponding to a resource location, and where the first signal is used to enable the second device to determine, according to the first signal, the first resource location at which the first device sends the second signal or the control signal of the second signal, and send a first signal of the second device at a resource location different from the determined first resource location; and send the second signal or the control signal of the second signal to the second device at the resource location by using the transceiver.

In a first possible implementation of the third aspect, the first resource location indication information includes:
at least one bit, used to indicate whether to send the second signal in a next period of a current period; and
a resource bitmap, a control signal index, or at least two of a physical resource block PRB start location, a PRB end location, or a PRB quantity, used to indicate the resource location used for sending the second signal or the control signal of the second signal.

In a third possible implementation of the third aspect, when sending the second signal to the second device at the resource location by using the transceiver, the processor is specifically configured to:
determine a fourth resource location and a fifth resource location according to the transmission pattern, where the fourth resource location is the first resource location indicated by the first resource location indication information; and
send the second signal to the second device at the fourth resource location by using the transceiver, and send the second signal to the second device at the fifth resource location by using the transceiver; or
send the second signal to the second device at the fourth resource location by using the transceiver, and skip sending the second signal at the fifth resource location.

In a fourth possible implementation of the third aspect, the processor is further configured to: after sending the second signal to the second device at the resource location by using the transceiver, send, to the second device by using the transceiver and a resource location different from the resource location used for sending the second signal, a first signal that carries second resource location indication information, where the second resource location indication information is used to notify the second device of a sixth resource location at which the first device sends the second signal or the control signal of the second signal.

In a fifth possible implementation of the third aspect, the processor is further configured to: after sending the second signal to the second device at the resource location by using the transceiver, receive, by using the transceiver, a first signal that carries the first resource location indication information and that is sent by a device belonging to a same area as the first device, where the device belonging to the same area as the first device includes a device whose physical location belongs to a same area as the first device or a device whose first signal occupies a resource location in a same area as the first device.

In a sixth possible implementation of the third aspect, the processor is further configured to: after sending the first signal to the second device by using the transceiver, determine, according to a preset relationship and a resource location used for sending the first signal, the resource location at which the first device sends the second signal or the control signal of the second signal, where the preset relationship is a relationship between the resource location used for sending the first signal and the resource location used for sending the second signal or the control signal of the second signal, and the preset relationship is pre-stored on the first device and the second device.

In a eighth possible implementation of the third aspect, when sending the second signal to the second device at the resource location by using the transceiver, the processor is specifically configured to:
determine a fourth resource location and a fifth resource location according to the transmission pattern, where the fourth resource location is the resource location; and
send the second signal to the second device at the fourth resource location by using the transceiver, and send the second signal to the second device at the fifth resource location by using the transceiver; or
send the second signal to the second device at the fourth resource location by using the transceiver, and skip sending the second signal at the fifth resource location.

According to the information transmission method and the device provided in the embodiments, the first device sends the first signal to the second device; after receiving the first signal, the second device determines, according to the first signal, the resource location at which the first device sends the second signal or the control signal of the second signal; when sending the first signal of the second device, the second device does not use a resource location that is the same as the resource location at which the first device sends the second signal or the control signal of the second signal, but selects another available resource location; and the first device sends the second signal to the second device at the determined resource location. Therefore, a conflict between the first signal sent by the second device and the second signal sent by the first device can be avoided, so that the second device can quickly and accurately receive the second signal sent by the first device.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of Embodiment 1 of an information transmission method according to the present invention;
FIG. 2 is a schematic flowchart of Embodiment 2 of an information transmission method according to the present invention;
FIG. 3 is a schematic flowchart of Embodiment 3 of an information transmission method according to the present invention;
FIG. 4 is a schematic flowchart of Embodiment 4 of an information transmission method according to the present invention;
FIG. 5 is a schematic diagram of a transmission pattern according to an embodiment of the present invention;
FIG. 6 is a schematic diagram of locations in a transmission pattern that are corresponding to resource locations used by different devices according to an embodiment of the present invention;
FIG. 7 is a schematic diagram of transmission patterns in which a device A and other devices 2 to 9 adjacent to the device A send a discovery signal twice in one period;
FIG. 8 is a schematic diagram of a first resource location and a second resource location that are determined by a device A according to a transmission pattern;
FIG. 9 is a schematic diagram of resource locations indicated by resource location indication information carried in two times of sending a new discovery signal by a device A;
FIG. 10 is a schematic flowchart of Embodiment 5 of an information transmission method according to the present invention;
FIG. 11 is a schematic structural diagram of Embodiment 1 of a communications device according to the present invention;
FIG. 12 is a schematic structural diagram of Embodiment 2 of a communications device according to the present invention;
FIG. 13 is a schematic structural diagram of Embodiment 3 of a communications device according to the present invention; and
FIG. 14 is a schematic structural diagram of Embodiment 4 of a communications device according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

Embodiments of the present invention provide an information transmission method and a device, so that a conflict between a CAM signal or a DENM signal sent by a device in a V2V system and a discovery signal sent by another device can be avoided, and the another device can quickly and accurately receive the CAM signal or the DENM signal sent by the device. The device in this specification may be understood as any moving device in an area, such as a vehicle traveling in a lane, a flying device flying in the air, or a ship travelling on a waterway, or may be a high-speed moving device such as a satellite running in an orbit. A specific application scenario is not limited in this specification. The CAM signal or the DENM signal may be another signal, and the discovery signal may also be another signal.

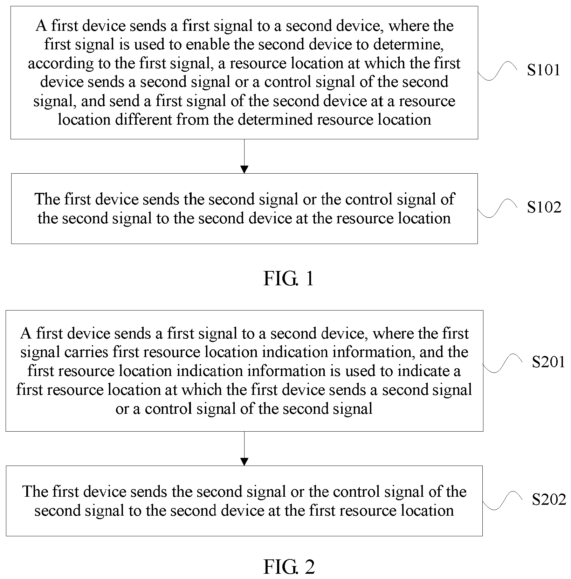

FIG. 1 is a schematic flowchart of Embodiment 1 of an information transmission method according to the present invention. As shown in FIG. 1, the method in this embodiment may include the following steps.

S101. A first device sends a first signal to a second device, where the first signal is used to enable the second device to determine, according to the first signal, a resource location at which the first device sends a second signal or a control signal of the second signal, and send a first signal of the second device at a resource location different from the determined resource location.

Specifically, the second signal may be a CAM signal or a DENM signal, and the first signal may be a discovery signal. The first device randomly selects a resource from a pre-configured resource pool to send the first signal. There may be a plurality of second devices. When there are a plurality of second devices, the first device broadcasts the first signal to another device.

When the second signal is sent by using a D2D discovery channel, the second device needs to determine, according to a resource location used for sending the first signal, the resource location at which the first device sends the second signal. When the second signal is sent by using a D2D communication channel, the second device needs to determine, according to a resource location used for sending the first signal, the resource location at which the first device sends the control signal of the second signal.

S102. The first device sends the second signal or the control signal of the second signal to the second device at the resource location.

According to the information transmission method provided in this embodiment, the first device sends the first signal to the second device; after receiving the first signal, the second device determines, according to the first signal, the resource location at which the first device sends the second signal or the control signal of the second signal; when sending the first signal of the second device, the second device does not use a resource location that is the same as the resource location at which the first device sends the second signal or the control signal of the second signal, but selects another available resource location; and the first device sends the second signal to the second device at the determined resource location. Therefore, a conflict between the first signal sent by the second device and the second signal sent by the first device can be avoided, so that the second device can quickly and accurately receive the second signal sent by the first device.

FIG. 2 is a schematic flowchart of Embodiment 2 of an information transmission method according to the present invention. As shown in FIG. 2, the method in this embodiment may include the following steps.

S201. A first device sends a first signal to a second device, where the first signal carries first resource location indication information, and the first resource location indication information is used to indicate a first resource location at which the first device sends a second signal or a control signal of the second signal.

Specifically, the first resource location is learned by the first device in advance before the first device sends the first signal. The first resource location is learned in two manners. In a first manner, the first resource location is randomly selected before the first device sends the first signal to the second device. In a second manner, the first device receives and stores the first resource location sent by a base station.

S202. The first device sends the second signal or the control signal of the second signal to the second device at the first resource location.

In this embodiment of the present invention, the first signal sent by the first device to the second device carries the first resource location indication information. When the second signal is sent by using a D2D discovery channel, the first resource location indication information is used to indicate the resource location at which the first device sends the second signal. After receiving the first signal, when sending a first signal of the second device, the second device does not use a resource location that is the same as the resource location at which the first device sends the second signal, but selects another available resource location. A resource location that is different in a time domain or both a time domain and a frequency domain may be selected. Therefore, a conflict between the first signal sent by the second device and the second signal sent by the first device can be avoided, so that the second device can quickly and accurately receive the second signal sent by the first device. Alternatively, the first signal may be a communication signal. In this case, when sending the first signal, the first device randomly selects a resource location from a pre-configured resource pool to send a control signal of the communication signal, and then sends the communication signal. The control signal indicates a resource location used for sending the communication signal. In this embodiment of the present invention, when the second signal is sent by using a D2D communication channel, the first resource location indication information is used to indicate the resource location at which the first device sends the control signal of the second signal. After receiving the first signal, when sending a first signal of the second device, the second device does not use the resource location at which the first device sends the control signal of the second signal for sending, but selects another available resource location. Therefore, a conflict between the first signal sent by the second device and the second signal sent by the first device can be avoided, so that the second device can quickly and accurately receive the second signal sent by the first device.

The first resource location indication information includes at least one bit, used to indicate whether to send the second signal in a next period of a current period. For example, "1" represents yes, and "0" represents no. The first signal may include a resource bitmap, a control signal index, or at least two of a physical resource block (Physical Resource Block, PRB for short) start location, a PRB end location, or a PRB quantity, used to indicate the resource location used for sending the second signal or the control signal of the second signal. One PRB is a minimum unit of a resource location. One PRB occupies 12 consecutive subcarriers in a frequency domain, and occupies one timeslot in a time domain. A length of one timeslot is 0.5 ms. A resource occupied by a sending signal may include a plurality of PRBs, for example, two PRBs. In this case, the occupied resource includes 12 consecutive subcarriers in the frequency domain, and includes one subframe in the time domain, where a length of one subframe is 1 ms; or includes 24 consecutive subcarriers in the frequency domain, and includes one timeslot in the time domain.

After sending the second signal to the second device according to the resource location indication information for a first time, the first device periodically sends the second signal at the first resource location according to a preset period. When the first device sends the second signal, the first signal of the first device may be sent at a resource location different from the resource location used for sending the second signal, or may be not sent.

In a possible implementation, when the first signal (which is a new first signal) of the first device is sent at the resource location different from the resource location used for sending the second signal,
the first device specifically sends, to the second device at the resource location different from the resource location used for sending the second signal, a first signal that carries second resource location indication information. The second resource location indication information is used to notify the second device of a sixth resource location at which the first device sends the second signal or the control signal of the second signal. One purpose of this operation is to avoid a problem that some device is always at a location in a dead zone of the resource location at which the first device sends the second signal and can never receive the second signal sent by the first device at the resource location. Another purpose is: If a new device is added to an area in which the first device is located, the new device may receive the first signal of the first device, and learn the resource location at which the first device sends the second signal, so that when selecting a resource location used for sending a first signal of the new device, the new device avoids the resource location at which the first device sends the second signal, and can quickly and successfully receive the second signal sent by the first device.

Further, in another possible implementation, because both the first signal and the second signal are limited by half-duplex, when sending a first signal, a device (referred to as a device for which an occupied resource location and the resource location occupied by the first device are dead zones for each other) that occupies a resource location that is the same, in the time domain, as the resource location occupied by the first device can never receive the first signal sent by the first device. In this case, after the sending, by the first device, the second signal to the second device at the first resource location, the method further includes:
receiving, by the first device, a first signal that carries the first resource location indication information and that is sent by a device belonging to a same area as the first device, where the device belonging to the same area as the first device includes a device whose physical location belongs to a same area as the first device or a device whose discovery signal occupies a resource in a same area as the first device. That is, after receiving the first signal that carries the first resource location indication information and that is sent by the first device, the device belonging to the same area as the first device broadcasts, to another device, the resource location at which the first device sends the second signal, and adds, to a first signal to be sent by the device belonging to the same area as the first device, the resource location indication information that indicates the first resource location. In this way, the device for which the occupied resource location and the resource location occupied by the first device are dead zones for each other may determine, according to the first signal of the device belonging to the same area as the first device, the resource location at which the first device sends the second signal. It should be noted that there may be one device that belongs to a same area as the first device and that sends, to the another device, the first signal carrying the first resource location indication information, so as to further save resources.

According to the information transmission method provided in this embodiment, the first signal sent by the first device to the second device carries the first resource location indication information, and the first resource location indication information is used to indicate the first resource location at which the first device sends the second signal or the control signal of the second signal; the first device sends the second signal to the second device at the first resource location; after receiving the first signal, when sending a first signal of the second device, the second device does not use a resource location that is the same as the first resource location, but selects another available resource location. Therefore, a conflict between the first signal sent by the second device and the second signal sent by the first device can be avoided, so that the second device can quickly and accurately receive the second signal sent by the first device.

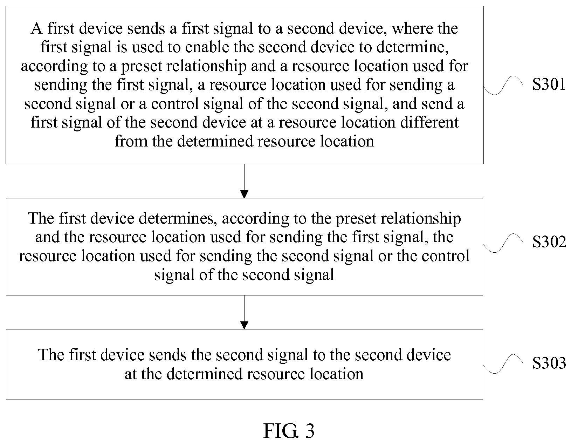

FIG. 3 is a schematic flowchart of Embodiment 3 of an information transmission method according to the present invention. As shown in FIG. 3, the method in this embodiment may include the following steps.

S301. A first device sends a first signal to a second device, where the first signal is used to enable the second device to determine, according to a preset relationship and a resource location used for sending the first signal, a resource location used for sending a second signal or a control signal of the second signal, and send a first signal of the second device at a resource location different from the determined resource location. S302. The first device determines, according to the preset relationship and the resource location used for sending the first signal, the resource location used for sending the second signal or the control signal of the second signal.

The preset relationship is a relationship between the resource location used for sending the first signal and the resource location used for sending the second signal or the control signal of the second signal, and the preset relationship is pre-stored on the first device and the second device.

Specifically, the preset relationship may be a calculation formula. The preset relationship may be configured by a third-party device (such as a base station or a control node) for the first device and the second device; or the preset relationship may be generated by the first device, the first device generates the preset relationship and then sends the relationship to the second device, and the preset relationship may be sent together with the first signal or may be sent before or after the first signal. It should be noted that regardless of whether the preset relationship is configured by the third-party device or generated by the first device, the preset relationship takes effect after the second signal is triggered. For example, whether the second signal is sent may be indicated in the first signal (for example, indicated by the at least one bit in Embodiment 2), and if the second signal is sent, the second signal is triggered. Such triggering may be independent of the first signal, and the second device is notified on another channel that the second signal is triggered.

S303. The first device sends the second signal to the second device at the determined resource location.

According to the information transmission method provided in this embodiment, the first device sends the first signal to the second device; after receiving the first signal, the second device determines, according to the preset relationship and the resource location used for sending the first signal, the resource location used for sending the second signal or the control signal of the second signal; when sending the first signal of the second device, the second device does not use a resource location that is the same as the resource location at which the first device sends the second signal, but selects another available resource location; and the first device determines, according to the preset relationship and the resource location used for sending the first signal, the resource location used for sending the second signal or the control signal of the second signal, and finally sends the second signal to the second device at the determined resource location. Therefore, a conflict between the first signal sent by the second device and the second signal sent by the first device can be avoided, so that the second device can quickly and accurately receive the second signal sent by the first device.

When the first signal is a discovery signal, because the first device randomly selects a resource from a pre-configured resource pool to send the first signal, there is a conflict that a plurality of devices simultaneously select a same time-frequency resource, and because the first signal is limited by half-duplex, a first signal sent by each of conflicting devices cannot be successfully received by another device. Even if the first signal is consecutively sent for a plurality of times, devices cannot quickly receive first signals from each other, and consequently implementation of the solution in the foregoing embodiment is also greatly affected. Therefore, the following embodiment of the present invention provides an information transmission method, so that devices quickly receive first signals from each other, and a second signal sent by a device or second signals sent by a plurality of devices can be quickly and accurately received. That the first signal carries the first resource location indication information in the embodiment shown in FIG. 2 is used as an example. A further solution in the embodiment shown in FIG. 3 is similar to that in the embodiment shown in FIG. 2, and is described in detail below with reference to the accompanying drawings.

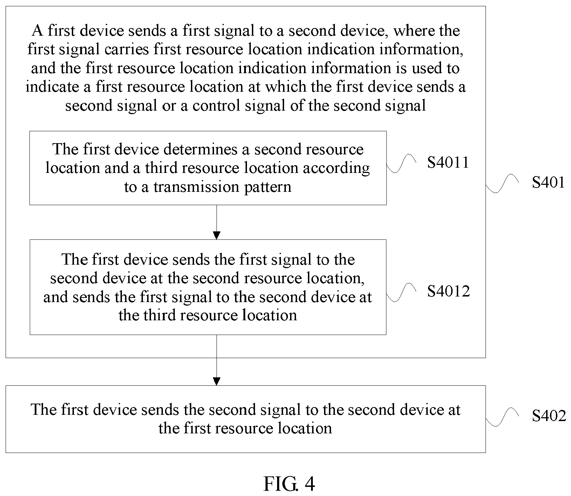

FIG. 4 is a schematic flowchart of Embodiment 4 of an information transmission method according to the present invention. As shown in FIG. 4, the method in this embodiment may include the following steps.

S401. A first device sends a first signal to a second device, where the first signal carries first resource location indication information, and the first resource location indication information is used to indicate a first resource location at which the first device sends a second signal or a control signal of the second signal.

That a first device sends a first signal to a second device specifically includes the following steps.

S4011. The first device determines a second resource location and a third resource location according to a transmission pattern.

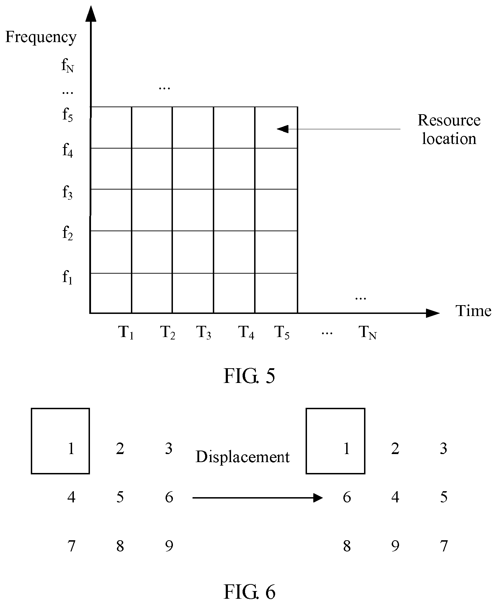

Each unit in the transmission pattern is corresponding to a resource location in a preset resource pool. FIG. 5 is a schematic diagram of a transmission pattern according to an embodiment of the present invention. As shown in FIG. 5, the transmission pattern includes a time axis and a frequency axis, the time axis includes N time points (T₁, T₂, ..., and T_{N}), the frequency axis includes N frequency points (f₁, f₂, ..., and f_{N}), and each pair of coordinates (Tₓ, f_{y}) in the transmission pattern is corresponding to a resource location. The second resource location is corresponding to first coordinates (Tᵢ, fⱼ) in the transmission pattern, and the third resource location is corresponding to second coordinates (T_{(i+m) mod N}, fⱼ) or (T_{(i+p) mod N}, f_{(i+q) mod N}) in the transmission pattern, where N, i, j, x, and y are positive integers, none of i, j, x, and y are greater than N, i+m≤N, and m, p, and q are 0 or positive integers.

S4012. The first device sends the first signal to the second device at the second resource location, and sends the first signal to the second device at the third resource location.

The transmission pattern specifies a rule for selecting resource locations used by the first device to send the first signal for two consecutive times. Two times of sending are used as one period. After determining, according to the transmission pattern, the resource locations at which the two consecutive times of sending are performed, the first device periodically sends the first signal. The first resource location indication information is carried in both times of sending the first signal in one period. The carried first resource location indication information may be the same or may be different. When the carried first resource location indication information is different, the first device may determine, according to resource location indication information in either of the two times, the resource location used for sending the second signal or the control signal of the second signal. In another implementation, if the first resource location is different from the second resource location, the first device may determine, according to a resource location in either of the two times and a preset relationship, the resource location used for sending the second signal or the control signal of the second signal.

S402. The first device sends the second signal to the second device at the first resource location.

In this embodiment, the first device sends the first signal at the two resource locations determined according to the transmission pattern, and the two resource locations are different at least in a time domain. To some extent, a conflict that a plurality of devices simultaneously select a same time-frequency resource because the device randomly uses a time-frequency resource in a resource pool to send the first signal can be effectively avoided, so that devices quickly receive first signals from each other, and a second signal sent by a device or second signals sent by a plurality of devices can be more quickly and accurately received.

Based on Embodiment 2, further, when the first signal carries the first resource location indication information, because magnitude of the second signal and magnitude of the first signal may be the same or may be different, when the magnitude of the second signal and the magnitude of the first signal are the same, a resource location indicated by the first resource location indication information is corresponding to one pair of coordinates in the transmission pattern; or when the magnitude of the second signal and the magnitude of the first signal are different, a resource location indicated by the first resource location indication information is corresponding to a plurality of coordinates in the transmission pattern. When sending the second signal to the second device according to the first resource location indication information, the first device may always send the second signal to the second device according to the first resource location indication information, or may perform sending according to a rule, specified by the transmission pattern, for selecting resource locations used for sending the second signal for two consecutive times.

The performing sending according to a rule, specified by the transmission pattern, for selecting resource locations used for sending the second signal for two consecutive times includes the following two cases:
In a first case, when the first resource location indicated by the first resource location indication information is corresponding to one pair of coordinates in the transmission pattern, S402 is specifically as follows:
S4021. The first device determines a fourth resource location and a fifth resource location according to the transmission pattern, where the fourth resource location is the first resource location indicated by the first resource location indication information.

The fourth resource location is the first resource location indicated by the first resource location indication information. If corresponding coordinates in the transmission pattern are (Tᵢ, fⱼ), the fifth resource location is coordinates (T_{(i+m) mod N}, fⱼ) or (T_{(i+p) mod N}, f_{(i+q) mod N}) in the transmission pattern according to the transmission pattern. The fourth resource location and the fifth resource location are different in a time domain and the same in a frequency domain, or are different in both a time domain and a frequency domain.

S4022. The first device sends the second signal to the second device at the fourth resource location, and sends the second signal to the second device at the fifth resource location.

In a second case, when the first resource location indicated by the first resource location indication information is corresponding to a plurality of coordinates in the transmission pattern, S402 is specifically as follows:
S4021'. The first device determines a fourth resource location and a fifth resource location according to the transmission pattern, where the fourth resource location is the first resource location indicated by the first resource location indication information.

The fourth resource location is the first resource location indicated by the first resource location indication information. If a plurality of corresponding coordinates in the transmission pattern are three pairs of coordinates: (Tᵢ, f₁), (Tᵢ, f₂), and (Tᵢ, f₃), the fifth resource location needs to change according to the transmission pattern. After the three pairs of coordinates (Ti, f₁), (Tᵢ, f₂), and (Tᵢ, f₃) change according to the transmission pattern, time points Tᵢ are different, and frequency points are also different. Therefore, if the second signal is sent at the fifth resource location, the second signal is dispersed into three resource locations. Consequently decoding the second signal becomes more complex after a device that receives the second signal receives the second signal. The following two sending manners may be selected in this embodiment of the present invention.

S4022'. The first device sends the second signal to the second device at the fourth resource location, and sends the second signal to the second device at the fifth resource location.

When this manner is used, a relatively high requirement is imposed on decoding performed by a receiving device.

Alternatively, the first device sends the second signal to the second device at the fourth resource location, and the first device does not send the second signal at the fifth resource location.

Specifically, when the first device does not send the second signal at the fifth resource location, the fifth resource location may be idle, or another device may be instructed to occupy the fifth resource location to send a first signal of the another device. In this case, a sending period in which the first device sends the second signal is twice a sending period of the first signal of the another device.

After sending the second signal to the second device at the first resource location for a first time, the first device periodically sends the second signal at the first resource location according to a preset period. When the first device sends the second signal, the first signal of the first device may be sent at a resource location different from the resource location used for sending the second signal, or may be not sent.

In a possible implementation, when the first signal (which is a new first signal) of the first device is sent at the resource location different from the resource location used for sending the second signal,
the first device specifically sends, to the second device at the resource location different from the resource location used for sending the second signal, a first signal that carries second resource location indication information. The second resource location indication information is used to notify the second device of a sixth resource location at which the first device sends the second signal or the control signal of the second signal. One purpose of this operation is to avoid a problem that some device is always at a location in a dead zone of the resource location at which the first device sends the second signal and can never receive the second signal sent by the first device at the resource location. Another purpose is: If a new device is added to an area in which the first device is located, the new device may receive the first signal of the first device, and learn the resource location at which the first device sends the second signal, so that when selecting a resource location used for sending a first signal of the new device, the new device avoids the resource location at which the first device sends the second signal, and can quickly and successfully receive the second signal sent by the first device.

Further, in another possible implementation, because both the first signal and the second signal are limited by half-duplex, when sending a first signal, a device (referred to as a device for which an occupied resource location and the resource location occupied by the first device are dead zones for each other) that occupies a resource location that is the same, in the time domain, as the resource location occupied by the first device can never receive the first signal sent by the first device. In this case, after the sending, by the first device, the second signal to the second device at the first resource location, the method further includes:
receiving, by the first device, a first signal that carries the first resource location indication information and that is sent by a device belonging to a same area as the first device, where the device belonging to the same area as the first device includes a device whose physical location belongs to a same area as the first device or a device whose discovery signal occupies a resource in a same area as the first device. That is, after receiving the first signal that carries the first resource location indication information and that is sent by the first device, the device belonging to the same area as the first device broadcasts, to another device, the resource location at which the first device sends the second signal, and adds, to a first signal to be sent by the device belonging to the same area as the first device, the resource location indication information that indicates the first resource location. In this way, the device for which the occupied resource location and the resource location occupied by the first device are dead zones for each other may determine, according to the first signal of the device belonging to the same area as the first device, the resource location at which the first device sends the second signal. It should be noted that there may be one device that belongs to a same area as the first device and that sends, to the another device, the first signal carrying the first resource location indication information, so as to further save resources.

In this embodiment, the first device sends the first signal at the two resource locations determined according to the transmission pattern, and the two resource locations are different at least in a time domain. To some extent, a conflict that a plurality of devices simultaneously select a same time-frequency resource because the device randomly uses a time-frequency resource in a resource pool to send the first signal can be effectively avoided, so that devices quickly receive first signals from each other, and a second signal sent by a device or second signals sent by a plurality of devices can be more quickly and accurately received.

For a specific instance, refer to FIG. 6. FIG. 6 is a schematic diagram of locations in a transmission pattern that are corresponding to resource locations used by different devices according to an embodiment of the present invention. Numbers in FIG. 6 represent the locations in the transmission pattern that are corresponding to the resource locations used by the different devices. For example, when sending first signals once, devices 1, 4, and 7 occupy a same subframe, and only occupied frequencies are different. In this case, the devices 1, 4, and 7 cannot receive the first signals that are broadcast by each other. In a next time of sending the first signals, the devices 1, 4, and 7 select different subframes according to a rule specified by the transmission pattern, so that the devices 1, 4, and 7 can receive the first signals that are broadcast by each other.

Devices that are in a same subframe in one time of sending may select, in a next time of sending, resource locations corresponding to different locations in the transmission pattern in a time domain. As shown in FIG. 6, devices 2, 5, and 8 occupy a same subframe in one time of sending, and devices 3, 6, and 9 occupy a same subframe in one time of sending. The devices 2, 5, and 8 or the devices 3, 6, and 9 may select, in a next time of sending, corresponding different locations in the transmission pattern in the time domain according to the rule specified by the transmission pattern, so that the devices 2, 5, and 8 or the devices 3, 6, and 9 can receive, after two times of sending, first signals that are broadcast by each other, and a quantity of times of sending the first signals is effectively reduced. In this way, the devices quickly receive the first signals from each other.

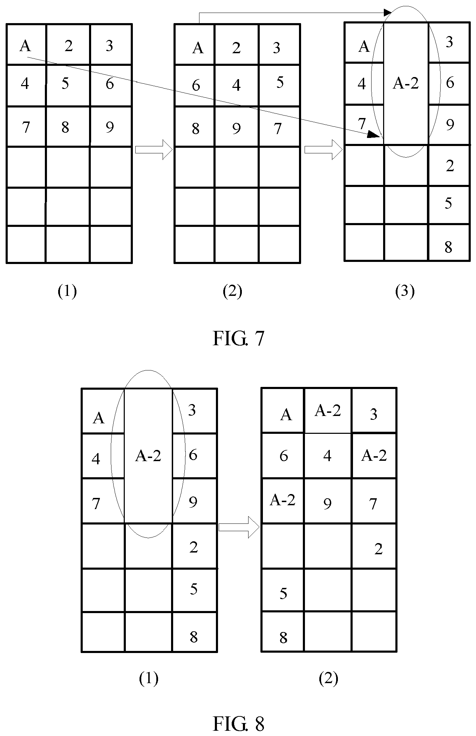

For example, a first signal is a discovery signal and a second signal is a CAM signal. The CAM signal is sent by using a D2D discovery channel. For a specific instance, refer to FIG. 7, FIG. 8, and FIG. 9. With reference to FIG. 7, FIG. 8, and FIG. 9, first devices shown in the figures are A. A specific procedure is as follows:
S501. A device A sends a discovery signal to a second device, where the discovery signal is sent twice in one period.

There are a plurality of second devices, and a sending manner is broadcasting. FIG. 7 is a schematic diagram of transmission patterns in which a device A and other devices 2 to 9 adjacent to the device A send a discovery signal twice in one period. (1) and (2) in FIG. 7 are transmission patterns in which the device A and other devices 2 to 9 adjacent to the device A send a discovery signal twice in one period. Resource location indication information is carried in both times of sending the discovery signal by the device A. A resource location that is used by a first device to send a second signal and that is indicated by the resource location indication information is an A-2 location shown in (3) in FIG. 7, and A-2 occupies three subframe locations.

For example, in one time of sending discovery signals, devices A, 4, and 7 occupy a same subframe, and only occupied frequencies are different. In this case, the devices 1, 4, and 7 cannot receive the first signals that are broadcast by each other. In a next time of sending discovery signals, the devices A, 4, and 7 select different subframes according to a rule specified by the transmission pattern, so that the devices A, 4, and 7 can receive the discovery signals that are broadcast by each other.

S502. The device A sends a CAM signal to the second device according to a resource location A-2 indicated by resource location indication information.

Specifically, the device A determines a first resource location and a second resource location according to the transmission pattern. FIG. 8 is a schematic diagram of the first resource location and the second resource location that are determined by the device A according to the transmission pattern. As shown in (1) in FIG. 8, the first resource location is the resource location A-2 indicated by the resource location indication information, and the second resource location changes according to the rule of the transmission pattern, for example, three subframe locations A-2 shown in (2) in FIG. 8. Then, in one time of sending the CAM signal, the device A occupies A-2 shown in (1) in FIG. 8, and in a next time of sending the CAM signal, the device A occupies A-2 shown in (2) in FIG. 8, or in a next time of sending the CAM signal, the device A still occupies A-2 shown in (1) in FIG. 8. After receiving the discovery signal sent by the first device, the second device learns, by using the resource indication information, that a resource location to be occupied by the device A to send the CAM signal is A-2 (subframes used by the original devices 2, 5, and 8) shown in (1) in FIG. 8, avoids the location, and selects another subframe (as shown in (1) in FIG. 8). Therefore, the second device can more quickly and accurately receive the CAM signal sent by the first device.

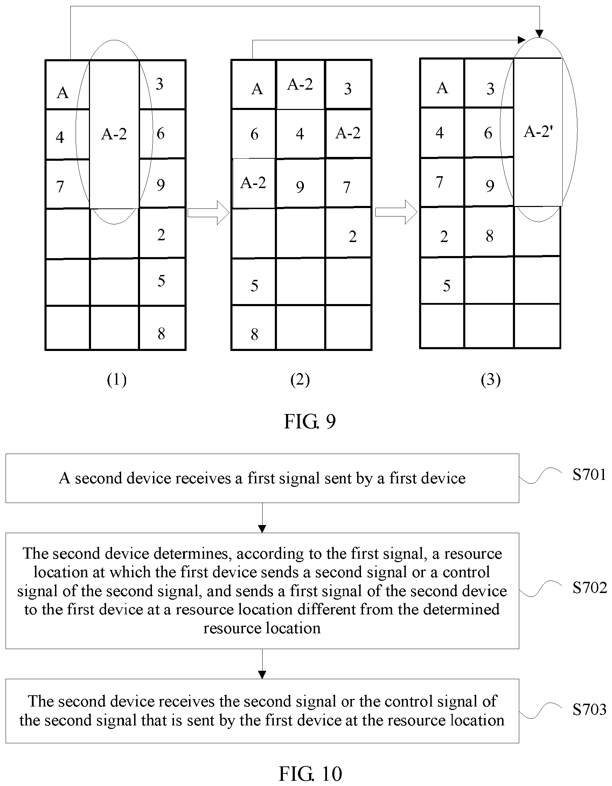

Further, each time the device A sends the CAM signal, the discovery signal of the device A is still sent, and is sent at a resource location different from the resource location used for sending the CAM signal. A sent new discovery signal carries new resource location indication information. FIG. 9 is a schematic diagram of resource locations indicated by resource location indication information carried in two times of sending the new discovery signal by the device A. As shown in (3) in FIG. 9, new resource location indication information is carried in both times of sending the new discovery signal by the device A. A resource location indicated by the new resource location indication information is A-2', and is used by the device A to send the CAM signal again.

For example, a first signal is a discovery signal and a second signal is a CAM signal. The CAM signal is sent by using a D2D communication channel. A specific procedure is as follows:
S601. A first device sends a discovery signal to a second device, where the discovery signal is sent twice in one period.

The discovery signal may be sent in any manner in the foregoing embodiments. Resource location indication information is carried in both times of sending the discovery signal by the first device. The resource location indication information is used to indicate a resource location at which the first device sends a control signal of a second CAM signal. For example, the control signal is a scheduling assignment (Schedule Assignment, SA for short) signal. The resource location indication information is used to indicate a resource location at which the first device sends an SA signal of the CAM signal. The SA signal is sent twice in a resource pool of control signals of communication signals, and the SA signal is used to indicate a resource location, a modulation and coding scheme, and the like that are used for sending the CAM signal, and is used by the second device to receive, demodulate, and decode the CAM signal.

S602. The first device sends an SA signal of a CAM signal to the second device at a resource location indicated by resource location indication information.

S603. The first device indicates, by using the SA signal, control information such as a resource location and a modulation and coding scheme that are used for sending the CAM signal, and sends the CAM signal to the second device at the resource location indicated by the SA signal.

There are two manners herein in which the first device indicates, by using the resource location indication information, the resource location at which the first device sends the control signal of the CAM signal. In a first manner, the first device indicates, by using the resource location indication information, a specific PRB location or a resource bitmap used by the first device to send the control signal of the CAM signal. In a second manner, the first device indicates, by using the resource location indication information, an index (Index) used by the first device to send the control signal of the second signal.

FIG. 10 is a schematic flowchart of Embodiment 5 of an information transmission method according to the present invention. As shown in FIG. 10, the method in this embodiment may include the following steps.

S701. A second device receives a first signal sent by a first device.

S702. The second device determines, according to the first signal, a resource location at which the first device sends a second signal or a control signal of the second signal, and sends a first signal of the second device to the first device at a resource location different from the determined resource location.

Specifically, there are two possible implementations for S702 in which the second device determines, according to the first signal, the resource location at which the first device sends the second signal or the control signal of the second signal. In one possible implementation, the first signal carries first resource location indication information, and the first resource location indication information is used to indicate a first resource location at which the first device sends the second signal or the control signal of the second signal. If the first resource location indication information is used to indicate the first resource location at which the first device sends the second signal, after receiving the first signal, when sending the first signal of the second device, the second device does not use a resource location that is the same as the first resource location, but selects another available resource location. A resource location that is different in a time domain or both a time domain and a frequency domain may be selected. Therefore, a conflict between the first signal sent by the second device and the second signal sent by the first device can be avoided, so that the second device can quickly and accurately receive the second signal sent by the first device. If the first resource location indication information is used to indicate the first resource location at which the first device sends the control signal of the second signal, after receiving the first signal, the second device does not use the first resource location to send the first signal of the second device, but selects another available resource location. Therefore, a conflict between the first signal sent by the second device and the second signal sent by the first device can be avoided, so that the second device can quickly and accurately receive the second signal sent by the first device.

The first resource location indication information may include: at least one bit, used to indicate whether to send the second signal in a next period of a current period. For example, "1" represents yes, and "0" represents no. The first signal may include a resource bitmap, a control signal index, or at least two of a PRB start location, a PRB end location, or a PRB quantity, used to indicate the resource location used for sending the second signal or the control signal of the second signal.

In the other possible implementation, the second device determines, according to a preset relationship and a resource location used for sending the first signal, the resource location at which the first device sends the second signal or the control signal of the second signal. The preset relationship is a relationship between the resource location used for sending the first signal and the resource location used for sending the second signal or the control signal of the second signal, and the preset relationship is pre-stored on the first device and the second device.

Specifically, the preset relationship may be a calculation formula. The preset relationship may be configured by a third-party device (such as a base station or a control node) for the first device and the second device; or the preset relationship may be generated by the first device, the first device generates the preset relationship and then sends the relationship to the second device, and the preset relationship may be sent together with the first signal or may be sent before or after the first signal. It should be noted that regardless of whether the preset relationship is configured by the third-party device or generated by the first device, the preset relationship takes effect after the second signal is triggered. For example, whether the second signal is sent may be indicated in the first signal (for example, indicated by the at least one bit in Embodiment 2), and if the second signal is sent, the second signal is triggered. Such triggering may be independent of the first signal, and the second device is notified on another channel that the second signal is triggered.

S703. The second device receives the second signal or the control signal of the second signal that is sent by the first device at the resource location.

According to the information transmission method provided in this embodiment, after receiving the first signal sent by the first device, the second device determines, according to the first resource location indication information carried in the first signal, the resource location at which the first device sends the second signal or the control signal of the second signal, or determines, according to the preset relationship and the resource location used for sending the first signal, the resource location at which the first device sends the second signal or the control signal of the second signal, and when sending the first signal of the second device, the second device does not use a resource location that is the same as the resource location at which the first device sends the second signal, but selects another available resource location. Therefore, a conflict between the first signal sent by the second device and the second signal sent by the first device can be avoided, so that the second device can quickly and accurately receive the second signal sent by the first device.

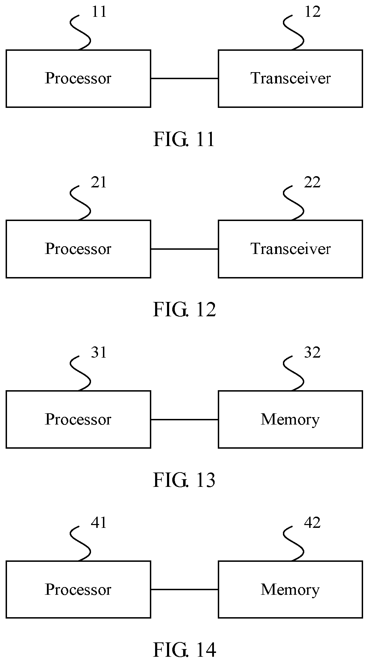

FIG. 11 is a schematic structural diagram of Embodiment 1 of a communications device according to the present invention. As shown in FIG. 11, the communications device used as a first device in this embodiment may include a processor 11 and a transceiver 12. The processor 11 is configured to: send a first signal to a second device by using the transceiver 12, where the first signal is used to enable the second device to determine, according to the first signal, a resource location at which the first device sends a second signal or a control signal of the second signal, and send a first signal of the second device at a resource location different from the determined resource location; and send the second signal or the control signal of the second signal to the second device at the resource location by using the transceiver 12.

Optionally, the first signal carries first resource location indication information, and the first resource location indication information is used to indicate a first resource location at which the first device sends the second signal or the control signal of the second signal.

Optionally, the first resource location indication information includes:
at least one bit, used to indicate whether to send the second signal in a next period of a current period; and
a resource bitmap, a control signal index, or at least two of a physical resource block PRB start location, a PRB end location, or a PRB quantity, used to indicate the resource location used for sending the second signal or the control signal of the second signal.

Optionally, when sending the first signal to the second device by using the transceiver 12, the processor 11 is specifically configured to: determine a second resource location and a third resource location according to a transmission pattern; send the first signal to the second device at the second resource location; and send the first signal to the second device at the third resource location.

The transmission pattern includes a time axis and a frequency axis, the time axis includes N time points (T₁, T₂, ..., and T_{N}), the frequency axis includes N frequency points (f₁, f₂, ..., and f_{N}), and each pair of coordinates (Tₓ, f_{y}) in the transmission pattern is corresponding to a resource location; the second resource location is corresponding to first coordinates (Tᵢ, fⱼ) in the transmission pattern; and the third resource location is corresponding to second coordinates (T_{(i+m) mod N}, fⱼ) or (T_{(i+p) mod N}, f_{(i+q) mod N}) in the transmission pattern, where N, i, j, x, and y are positive integers, none of i, j, x, and y are greater than N, i+m≤N, and m, p, and q are 0 or positive integers.

Optionally, when sending the second signal to the second device at the resource location by using the transceiver 12, the processor 11 is specifically configured to:
determine a fourth resource location and a fifth resource location according to the transmission pattern, where the fourth resource location is the first resource location indicated by the first resource location indication information; and
send the second signal to the second device at the fourth resource location by using the transceiver 12, and send the second signal to the second device at the fifth resource location by using the transceiver 12; or send the second signal to the second device at the fourth resource location by using the transceiver 12, and skip sending the second signal at the fifth resource location.

Optionally, the processor 11 is further configured to: after sending the second signal to the second device at the resource location by using the transceiver 12, send, to the second device by using the transceiver 12 and a resource location different from the resource location used for sending the second signal, a first signal that carries second resource location indication information, where the second resource location indication information is used to notify the second device of a sixth resource location at which the first device sends the second signal or the control signal of the second signal.

Optionally, the processor 11 is further configured to: after sending the second signal to the second device at the resource location by using the transceiver 12, receive, by using the transceiver 12, a first signal that carries the first resource location indication information and that is sent by a device belonging to a same area as the first device, where the device belonging to the same area as the first device includes a device whose physical location belongs to a same area as the first device or a device whose first signal occupies a resource location in a same area as the first device.

Optionally, the processor 11 is further configured to: after sending the first signal to the second device by using the transceiver 12, determine, according to a preset relationship and a resource location used for sending the first signal, the resource location at which the first device sends the second signal or the control signal of the second signal, where the preset relationship is a relationship between the resource location used for sending the first signal and the resource location used for sending the second signal or the control signal of the second signal, and the preset relationship is pre-stored on the first device and the second device.

Optionally, when sending the first signal to the second device by using the transceiver 12, the processor 11 is specifically configured to: determine a second resource location and a third resource location according to a transmission pattern; send the first signal to the second device at the second resource location by using the transceiver 12; and send the first signal to the second device at the third resource location.

The transmission pattern includes a time axis and a frequency axis, the time axis includes N time points (T₁, T₂, ..., and T_{N}), the frequency axis includes N frequency points (f₁, f₂, ..., and f_{N}), and each pair of coordinates (Tₓ, f_{y}) in the transmission pattern is corresponding to a resource location; the second resource location is corresponding to first coordinates (Tᵢ, fⱼ) in the transmission pattern; and the third resource location is corresponding to second coordinates (T_{(i+m) mod N}, fⱼ) or (T_{(i+p) mod N}, f_{(i+q) mod N}) in the transmission pattern, where N, i, j, x, and y are positive integers, none of i, j, x, and y are greater than N, i+m≤N, and m, p, and q are 0 or positive integers.

Optionally, when sending the second signal to the second device at the resource location by using the transceiver 12, the processor 11 is specifically configured to:
determine a fourth resource location and a fifth resource location according to the transmission pattern, where the fourth resource location is the resource location; and
send the second signal to the second device at the fourth resource location by using the transceiver 12, and send the second signal to the second device at the fifth resource location by using the transceiver 12; or send the second signal to the second device at the fourth resource location by using the transceiver 12, and skip sending the second signal at the fifth resource location.

The communications device in this embodiment may be configured to execute the technical solution executed by the first device in each method embodiment of the present invention. An implementation principle and a technical effect of the communications device are similar to those of the first device, and details are not described herein again.

FIG. 12 is a schematic structural diagram of Embodiment 2 of a communications device according to the present invention. As shown in FIG. 12, the communications device used as a second device in this embodiment may include a processor 21 and a transceiver 22.

The processor 21 is configured to: receive, by using the transceiver 22, a first signal sent by a first device; determine, according to the first signal, a resource location at which the first device sends a second signal or a control signal of the second signal, and send a first signal of the communications device to the first device at a resource location different from the determined resource location; and receive, by using the transceiver 22, the second signal or the control signal of the second signal that is sent by the first device at the resource location.

Optionally, the first signal carries first resource location indication information, and the first resource location indication information is used to indicate a first resource location at which the first device sends the second signal or the control signal of the second signal.

Optionally, the first resource location indication information includes:
at least one bit, used to indicate whether to send the second signal in a next period of a current period; and
a resource bitmap, a control signal index, or at least two of a physical resource block PRB start location, a PRB end location, or a PRB quantity, used to indicate the resource location used for sending the second signal or the control signal of the second signal.

Optionally, when determining, according to the first signal, the resource location at which the first device sends the second signal or the control signal of the second signal, the processor 21 is specifically configured to determine, according to a preset relationship and a resource location used for sending the first signal, the resource location at which the first device sends the second signal or the control signal of the second signal, where the preset relationship is a relationship between the resource location used for sending the first signal and the resource location used for sending the second signal or the control signal of the second signal, and the preset relationship is pre-stored on the first device and the second device.

The communications device in this embodiment may be configured to execute the technical solution executed by the second device in each method embodiment of the present invention. An implementation principle and a technical effect of the communications device are similar to those of the second device, and details are not described herein again.

FIG. 13 is a schematic structural diagram of Embodiment 3 of a communications device according to the present invention. As shown in FIG. 13, the communications device used as a first device in this embodiment may include a processor 31 and a memory 32.

The memory 32 stores an execution instruction. When the communications device in this embodiment runs, the processor 31 communicates with the memory 32. The processor 31 invokes the execution instruction in the memory 32 to execute the solution executed by the first device in each method embodiment of the present invention. An implementation principle and a technical effect of the communications device are similar to those of the first device, and details are not described herein again.

FIG. 14 is a schematic structural diagram of Embodiment 4 of a communications device according to the present invention. As shown in FIG. 14, the communications device used as a second device in this embodiment may include a processor 41 and a memory 42. The memory 42 stores an execution instruction. When the communications device in this embodiment runs, the processor 41 communicates with the memory 42. The processor 41 invokes the execution instruction in the memory 42 to execute the solution executed by the second device in each method embodiment of the present invention.

An implementation principle and a technical effect of the communications device are similar to those of the second device, and details are not described herein again.

Persons of ordinary skill in the art may understand that all or some of the steps of the method embodiments may be implemented by a program instructing relevant hardware.

The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments to some or all technical features thereof, without departing from the scope of the technical solutions of the embodiments of the present invention.

## Claims

1. An information transmission method, comprising:
receiving (S701), by a second device, a first signal sent by a first device at a second resource location and a third resource location, wherein the first signal carries first resource location indication information being used to indicate a first resource location at which the first device sends a second signal or a control signal of the second signal, wherein the second resource location is corresponding to first coordinates (Tᵢ, fⱼ) in a transmission pattern, and wherein the third resource location is corresponding to second coordinates (T_{(i+m) modN}, fⱼ) or (T_{(i+p) mod N}, f_{(i+q) mod N}) in the transmission pattern, wherein N, i, j, x, and y are positive integers, none of i, j, x, and y are greater than N, i+m≤N, and m, p, and q are 0 or positive integers, and wherein the transmission pattern comprises a time axis and a frequency axis, the time axis comprises N time points (T₁, T₂, ..., and T_{N}), the frequency axis comprises N frequency points (f₁, f₂, ..., and f_{N}), and each pair of coordinates (Tₓ, f_{y}) in the transmission pattern is corresponding to a resource location;
determining (S702), by the second device according to the first signal, the first resource location at which the first device sends the second signal or the control signal of the second signal, and sending a first signal of the second device to the first device at a resource location different from the first resource location; and
receiving (S703), by the second device, the second signal or the control signal of the second signal that is sent by the first device at the first resource location.

2. The method according to claim 1, wherein the first resource location indication information comprises:
at least one bit, used to indicate whether to send the second signal in a next period of a current period; and
a resource bitmap, a control signal index, or at least two of a physical resource block PRB start location, a PRB end location, or a PRB quantity, used to indicate the resource location used for sending the second signal or the control signal of the second signal.

3. A communications device, used as a first device, and comprising a processor (11) and a transceiver (12), wherein
the processor (11) is configured to: send a first signal to a second device by using the transceiver at a second resource location and a third resource location, wherein the first signal carries first resource location indication information being used to indicate a first resource location at which the first device sends a second signal or a control signal of the second signal, wherein the second resource location is corresponding to first coordinates (Tᵢ, fⱼ) in a transmission pattern, wherein the third resource location is corresponding to second coordinates (T_{(i+m) mod N}, fⱼ) or (T_{(i+p) mod N}, f_{(i+q) mod N}) in the transmission pattern, wherein N, i, j, x, and y are positive integers, none of i, j, x, and y are greater than N, i+m≤N, and m, p, and q are 0 or positive integers, and wherein the transmission pattern comprises a time axis and a frequency axis, the time axis comprises N time points (T₁, T₂, ..., and T_{N}), the frequency axis comprises N frequency points (f₁, f₂, ..., and f_{N}), and each pair of coordinates (Tₓ, f_{y}) in the transmission pattern is corresponding to a resource location, and wherein the first signal is used to enable the second device to determine, according to the first signal, the first resource location at which the first device sends the second signal or the control signal of the second signal, wherein the first resource location is different from a resource location at which the second device sends a first signal after receiving the first signal; and send the second signal or the control signal of the second signal to the second device at the first resource location by using the transceiver.

4. The device according to claim 3, wherein the first resource location indication information comprises:
at least one bit, used to indicate whether to send the second signal in a next period of a current period; and
a resource bitmap, a control signal index, or at least two of a physical resource block PRB start location, a PRB end location, or a PRB quantity, used to indicate the resource location used for sending the second signal or the control signal of the second signal.

5. The device according to claim 3, wherein when sending the second signal to the second device at the resource location by using the transceiver, the processor is specifically configured to:
determine a fourth resource location and a fifth resource location according to the transmission pattern, wherein the fourth resource location is the first resource location indicated by the first resource location indication information; and
send the second signal to the second device at the fourth resource location by using the transceiver, and send the second signal to the second device at the fifth resource location by using the transceiver; or
send the second signal to the second device at the fourth resource location by using the transceiver, and skip sending the second signal at the fifth resource location.

6. The device according to any one of claims 3 to 5, wherein the processor is further configured to: after sending the second signal to the second device at the resource location by using the transceiver, send, to the second device by using the transceiver and a resource location different from the resource location used for sending the second signal, a first signal that carries second resource location indication information, wherein the second resource location indication information is used to notify the second device of a sixth resource location at which the first device sends the second signal or the control signal of the second signal.

7. The device according to any one of claims 3 to 5, wherein the processor is further configured to: after sending the second signal to the second device at the first resource location by using the transceiver, receive, by using the transceiver, a first signal that carries the first resource location indication information and that is sent by a device belonging to a same area as the first device, wherein the device belonging to the same area as the first device comprises a device whose physical location belongs to a same area as the first device or a device whose first signal occupies a resource location in a same area as the first device.

## Patentansprüche

1. Informationsübertragungsverfahren, umfassend:
Empfangen (S701), durch eine zweite Vorrichtung, eines ersten Signals, das durch eine erste Vorrichtung an einem zweiten Ressourcenstandort und einem dritten Ressourcenstandort gesendet wird, wobei das erste Signal Angabeinformationen zu einem ersten Ressourcenstandort trägt, die dazu verwendet werden, einen ersten Ressourcenstandort anzugeben, an dem die erste Vorrichtung ein zweites Signal oder ein Steuersignal des zweiten Signals sendet, wobei der zweite Ressourcenstandort ersten Koordinaten (Tᵢ, fⱼ) in einem Übertragungsmuster entspricht, und wobei der dritte Ressourcenstandort zweiten Koordinaten (T_{(i+m) mod N}, fⱼ) oder (T_{(i+p) mod N}, f_{(i+q) mod N}) in dem Übertragungsmuster entspricht, wobei N, i, j, x und y positive ganze Zahlen sind, keines von i, j, x und y größer als N ist, i+m≤N und m, p und q 0 oder positive ganze Zahlen sind, und wobei das Übertragungsmuster eine Zeitachse und eine Frequenzachse umfasst, wobei die Zeitachse N Zeitpunkte (T₁, T₂, ... und T_{N}) umfasst, die Frequenzachse N Frequenzpunkte (f₁, f₂, ... und f_{N}) umfasst und jedes Koordinatenpaar (Tₓ, f_{y}) in dem Übertragungsmuster einem Ressourcenstandort entspricht;
Bestimmen (S702), durch die zweite Vorrichtung gemäß dem ersten Signal, des ersten Ressourcenstandortes, an dem die erste Vorrichtung das zweite Signal oder das Steuersignal des zweiten Signals sendet, und Senden eines ersten Signals der zweiten Vorrichtung an die erste Vorrichtung an einem Ressourcenstandtort, der sich von dem ersten Ressourcenstandort unterscheidet; und
Empfangen (S703), durch die zweite Vorrichtung, des zweiten Signals oder des Steuersignals des zweiten Signals, das durch die erste Vorrichtung an dem ersten Ressourcenstandort gesendet wird.

2. Verfahren nach Anspruch 1, wobei die Angabeinformationen zum ersten Ressourcenstandort Folgendes umfassen:
mindestens ein Bit, das verwendet wird, um anzugeben, ob das zweite Signal in einem nächsten Zeitraum eines aktuellen Zeitraums gesendet werden soll; und
eine Ressourcen-Bitmap, einen Steuersignalindex oder mindestens zwei von einem Startstandort eines physischen Ressourcenblocks (PRB), einem PRB-Endstandort oder einer PRB-Menge, die dazu verwendet werden, den Ressourcenstandort anzugeben, der zum Senden des zweiten Signals oder des Steuersignals des zweiten Signals verwendet wird.

3. Kommunikationsvorrichtung, die als erste Vorrichtung verwendet wird und einen Prozessor (11) und einen Sendeempfänger (12) umfasst, wobei
der Prozessor (11) zu Folgendem konfiguriert ist: Senden eines ersten Signals an eine zweite Vorrichtung unter Verwendung des Sendeempfängers an einem zweiten Ressourcenstandort und einem dritten Ressourcenstandort, wobei das erste Signal Angabeinformationen zu einem ersten Ressourcenstandort trägt, die dazu verwendet werden, einen ersten Ressourcenstandort anzugeben, an dem die erste Vorrichtung ein zweites Signal oder ein Steuersignal des zweiten Signals sendet, wobei der zweite Ressourcenstandort ersten Koordinaten (Tᵢ, fⱼ) in einem Übertragungsmuster entspricht, wobei der dritte Ressourcenstandort zweiten Koordinaten (T_{(i+m) mod N}, fⱼ) oder (T_{(i+p) mod N}, f_{(i+q) mod N}) in dem Übertragungsmuster entspricht, wobei N, i, j, x und y positive ganze Zahlen sind, keines von i, j, x und y größer als N ist, i+m≤N und m, p und q 0 oder positive ganze Zahlen sind, und wobei das Übertragungsmuster eine Zeitachse und eine Frequenzachse umfasst, wobei die Zeitachse N Zeitpunkte (T₁, T₂, ... und T_{N}) umfasst, die Frequenzachse N Frequenzpunkte (f₁, f₂, ... und f_{N}) umfasst und jedes Koordinatenpaar (Tₓ, f_{y}) in dem Übertragungsmuster einem Ressourcenstandort entspricht, und wobei das erste Signal verwendet wird, um der zweiten Vorrichtung zu ermöglichen, gemäß dem ersten Signal den ersten Ressourcenstandort zu bestimmen, an dem die erste Vorrichtung das zweite Signal oder das Steuersignal des zweiten Signals sendet, wobei sich der erste Ressourcenstandort von einem Ressourcenstandort unterscheidet, an dem die zweite Vorrichtung ein erstes Signal nach dem Empfang des ersten Signals sendet; und Senden des zweiten Signals oder des Steuersignals des zweiten Signals an die zweite Vorrichtung an dem ersten Ressourcenstandort unter Verwendung des Sendeempfängers.

4. Vorrichtung nach Anspruch 3, wobei die Angabeinformationen zum ersten Ressourcenstandort Folgendes umfassen:
mindestens ein Bit, das verwendet wird, um anzugeben, ob das zweite Signal in einem nächsten Zeitraum eines aktuellen Zeitraums gesendet werden soll; und
eine Ressourcen-Bitmap, einen Steuersignalindex oder mindestens zwei von einem Startstandort eines physischen Ressourcenblocks (PRB), einem PRB-Endstandort oder einer PRB-Menge, die dazu verwendet werden, den Ressourcenstandort anzugeben, der zum Senden des zweiten Signals oder des Steuersignals des zweiten Signals verwendet wird.

5. Vorrichtung nach Anspruch 3, wobei beim Senden des zweiten Signals an die zweite Vorrichtung an dem Ressourcenstandort unter Verwendung des Sendeempfängers der Prozessor speziell zu Folgendem konfiguriert ist:
Bestimmen eines vierten Ressourcenstandortes und eines fünften Ressourcenstandortes gemäß dem Übertragungsmuster, wobei es sich bei dem vierten Ressourcenstandort um den ersten Ressourcenstandort handelt, der durch die Angabeinformationen zum ersten Ressourcenstandort angegeben wird; und
Senden des zweiten Signals an die zweite Vorrichtung an dem vierten Ressourcenstandort unter Verwendung des Sendeempfängers und Senden des zweiten Signals an die zweite Vorrichtung an dem fünften Ressourcenstandort unter Verwendung des Sendeempfängers; oder
Senden des zweiten Signals an die zweite Vorrichtung an dem vierten Ressourcenstandort unter Verwendung des Sendeempfängers und Überspringen des Sendens des zweiten Signals an dem fünften Ressourcenstandort.

6. Vorrichtung nach einem der Ansprüche 3 bis 5, wobei der Prozessor ferner zu Folgendem konfiguriert ist: nach dem Senden des zweiten Signals an die zweite Vorrichtung an dem Ressourcenstandort unter Verwendung des Sendeempfängers, Senden, an die zweite Vorrichtung unter Verwendung des Sendeempfängers und eines Ressourcenstandortes, der sich von dem zum Senden des zweiten Signals verwendeten Ressourcenstandort unterscheidet, eines ersten Signals, das Angabeinformationen zu einem zweiten Ressourcenstandort trägt, wobei die Angabeinformationen zum zweiten Ressourcenstandort dazu verwendet werden, die zweite Vorrichtung über einen sechsten Ressourcenstandort zu benachrichtigen, an dem die erste Vorrichtung das zweite Signal oder das Steuersignal des zweiten Signals sendet.

7. Vorrichtung nach einem der Ansprüche 3 bis 5, wobei der Prozessor ferner zu Folgendem konfiguriert ist: nach dem Senden des zweiten Signals an die zweite Vorrichtung an dem ersten Ressourcenstandort unter Verwendung des Sendeempfängers, Empfangen eines ersten Signals unter Verwendung des Sendeempfängers, das die Angabeinformationen zum ersten Ressourcenstandort trägt und das durch eine Vorrichtung gesendet wird, die zu demselben Gebiet gehört wie die erste Vorrichtung, wobei die Vorrichtung, die zu demselben Gebiet gehört wie die erste Vorrichtung, eine Vorrichtung, deren physischer Standort zu demselben Gebiet gehört wie die erste Vorrichtung, oder eine Vorrichtung umfasst, deren erstes Signal einen Ressourcenstandort in demselben Gebiet belegt wie die erste Vorrichtung.

## Revendications

1. Procédé de transmission d'informations comprenant :
la réception (S701), par un second dispositif, d'un premier signal envoyé par un premier dispositif au niveau d'un deuxième emplacement de ressource et d'un troisième emplacement de ressource, dans lequel le premier signal transporte des premières informations d'indication d'emplacement de ressource qui sont utilisées pour indiquer un premier emplacement de ressource au niveau duquel le premier dispositif envoie un second signal ou un signal de commande du second signal, dans lequel le deuxième emplacement de ressource correspond à des premières coordonnées (Tᵢ, fⱼ) dans un modèle de transmission et dans lequel le troisième emplacement de ressource correspond à des secondes coordonnées (T_{(i+m) mod N}, fⱼ) ou (T_{(i+p) mod N}, f_{(i+q) mod N}) dans le modèle de transmission, dans lequel N, i, j, x et y sont des entiers positifs, aucun de i, j, x et y n'est supérieur à N, i+m ≤ N, et m, p et q sont 0 ou des entiers positifs, et dans lequel le modèle de transmission comprend un axe des temps et un axe des fréquences, l'axe des temps comprend N points de temps (T₁, T₂, ... et T_{N}), l'axe des fréquences comprend N points de fréquence (f₁, f₂, ... et f_{N}), et chaque paire de coordonnées (Tₓ, f_{y}) dans le modèle de transmission correspond à un emplacement de ressource ;
la détermination (S702), par le second dispositif en fonction du premier signal, du premier emplacement de ressource au niveau duquel le premier dispositif envoie le second signal ou le signal de commande du second signal, et l'envoi d'un premier signal du second dispositif au premier dispositif au niveau d'un emplacement de ressource différent du premier emplacement de ressource ; et
la réception (S703), par le second dispositif, du second signal ou du signal de commande du second signal qui est envoyé par le premier dispositif au niveau du premier emplacement de ressource.

2. Procédé selon la revendication 1, dans lequel les premières informations d'indication d'emplacement de ressource comprennent :
au moins un bit, utilisé pour indiquer si envoyer le second signal dans une période suivante d'une période actuelle ; et
un bitmap de ressource, un indice de signal de commande, ou au moins deux parmi un emplacement de début de bloc de ressource physique PRB, un emplacement de fin de PRB ou une quantité de PRB, utilisés pour indiquer l'emplacement de ressource utilisé pour l'envoi du second signal ou du signal de commande du second signal.

3. Dispositif de communication, utilisé au niveau d'un premier dispositif et comprenant un processeur (11) et un émetteur-récepteur (12), dans lequel
le processeur (11) est configuré pour : envoyer un premier signal à un second dispositif en utilisant l'émetteur-récepteur au niveau d'un deuxième emplacement de ressource et d'un troisième emplacement de ressource, dans lequel le premier signal transporte des premières informations d'indication d'emplacement de ressource qui sont utilisées pour indiquer un premier emplacement de ressource au niveau duquel le premier dispositif envoie un second signal ou un signal de commande du second signal, dans lequel le deuxième emplacement de ressource correspond à des premières coordonnées (Tᵢ, fⱼ) dans un modèle de transmission, dans lequel le troisième emplacement de ressource correspond à des secondes coordonnées (T_{(i+m) mod N}, fⱼ) ou (T_{(i+p) mod N}, f_{(i+q) mod N}) dans le modèle de transmission, dans lequel N, i, j, x et y sont des entiers positifs, aucun de i, j, x et y n'est supérieur à N, i+m ≤ N, et m, p et q sont 0 ou des entiers positifs, et dans lequel le modèle de transmission comprend un axe des temps et un axe des fréquences, l'axe des temps comprend N points de temps (T₁, T₂, ... et T_{N}), l'axe des fréquences comprend N points de fréquence (f₁, f₂, ... et f_{N}), et chaque paire de coordonnées (Tₓ, f_{y}) dans le modèle de transmission correspond à un emplacement de ressource, et dans lequel le premier signal est utilisé pour permettre au second dispositif de déterminer, en fonction du premier signal, le premier emplacement de ressource au niveau duquel le premier dispositif envoie le second signal ou le signal de commande du second signal, dans lequel le premier emplacement de ressource est différent d'un emplacement de ressource au niveau duquel le second dispositif envoie un premier signal après la réception du premier signal ; et d'envoyer le second signal ou le signal de commande du second signal au second dispositif au niveau du premier emplacement de ressource en utilisant l'émetteur-récepteur.

4. Dispositif selon la revendication 3, dans lequel les premières informations d'indication d'emplacement de ressource comprennent :
au moins un bit, utilisé pour indiquer si envoyer le second signal dans une période suivante d'une période actuelle ; et
un bitmap de ressource, un indice de signal de commande, ou au moins deux parmi un emplacement de début de bloc de ressource physique PRB, un emplacement de fin de PRB ou une quantité de PRB, utilisés pour indiquer l'emplacement de ressource utilisé pour l'envoi du second signal ou du signal de commande du second signal.

5. Dispositif selon la revendication 3, dans lequel, lors de l'envoi du second signal au second dispositif au niveau de l'emplacement de ressource en utilisant l'émetteur-récepteur, le processeur est configuré spécifiquement pour :
déterminer un quatrième emplacement de ressource et un cinquième emplacement de ressource en fonction du modèle de transmission, dans lequel le quatrième emplacement de ressource est le premier emplacement de ressource indiqué par les premières informations d'indication d'emplacement de ressource ; et
envoyer le second signal au second dispositif au niveau du quatrième emplacement de ressource en utilisant l'émetteur-récepteur et envoyer le second signal au second dispositif au niveau du cinquième emplacement de ressource en utilisant l'émetteur-récepteur ; ou
envoyer le second signal au second dispositif au niveau du quatrième emplacement de ressource en utilisant l'émetteur-récepteur et omettre l'envoi du second signal au niveau du cinquième emplacement de ressource.

6. Dispositif selon l'une quelconque des revendications 3 à 5, dans lequel le processeur est configuré en outre pour : après l'envoi du second signal au second dispositif au niveau de l'emplacement de ressource en utilisant l'émetteur-récepteur, envoyer, au second dispositif en utilisant l'émetteur-récepteur et un emplacement de ressource différent de l'emplacement de ressource utilisé pour envoyer le second signal, un premier signal qui transporte des secondes informations d'indication d'emplacement de ressource, dans lequel les secondes informations d'indication d'emplacement de ressource sont utilisées pour notifier au second dispositif un sixième emplacement de ressource au niveau duquel le premier dispositif envoie le second signal ou le signal de commande du second signal.

7. Dispositif selon l'une quelconque des revendications 3 à 5, dans lequel le processeur est configuré en outre pour : après l'envoi du second signal au second dispositif au niveau du premier emplacement de ressource en utilisant l'émetteur-récepteur, recevoir, en utilisant l'émetteur-récepteur, un premier signal qui transporte les premières informations d'indication d'emplacement de ressource et qui est envoyé par un dispositif appartenant à une même zone que le premier dispositif, dans lequel le dispositif appartenant à la même zone que le premier dispositif comprend un dispositif dont un emplacement physique appartient à une même zone que le premier dispositif ou un dispositif dont un premier signal occupe un emplacement de ressource dans une même zone que le premier dispositif.
